# EUROPÄISCHE PATENTANMELDUNG

(11) **EP 1 970 573 A2**
(43) Veröffentlichungstag der Anmeldung: **17.09.2008**
(21) Anmeldenummer: 08102567.8
(22) Anmeldetag: 13.03.2008
(51) Int. Cl.: F16B 2/10

(54) **Transportsicherung für Geräte eines mobilen Büros**

(30) Priorität: 13.03.2007 DE 102007012573
(71) Anmelder: CaseSys electronics & solutions GmbH & Co. KG, 91334 Hemhofen (DE)
(72) Erfinder: Bräun, Lothar, 91334, Hemhofen (DE); Egermeier, Bernhard, 90556, Seukendorf (DE); Falk, Peter, 91093, Heßdorf (DE)
(74) Vertreter: Lösch, Christoph Ludwig Klaus

(57) **Zusammenfassung**

Die Erfindung betrifft eine Transportsicherung für eine tragbare Vorrichtung für ein mobiles Büro, welche als Handkoffer mit einer im Abstand zum Kofferboden gelagerten Montageplatte (M) ausgestaltet ist und bei welcher die Montageplatte (M) schwenkbar gelagert ist, wobei die Transportsicherung (T) aus einem im wesentlichen u-förmigen Grundkörper (GK), einem zwischen den U-Schenkeln schwenkbar gelagerten Halter (H) und einem an der Basis des U-Schenkels angeordneten Befestigungsmittel besteht, so dass nach manuellem Verschwenken der Transportsicherung (T) auf der Montageplatte (M) angeordnete Geräte (G) und/oder Zubehör in Form- und/oder Klemmeingriff gehalten werden.

## Beschreibung

Die Erfindung betrifft eine Transportsicherung für eine tragbare Vorrichtung für ein mobiles Büro, welche als Handkoffer mit einer im Abstand zum Kofferboden gelagerten Montageplatte ausgestaltet ist und bei welcher die Montageplatte schwenkbar gelagert ist (Oberbegriff des Patentanspruchs 1).

Vorrichtungen zur Aufnahme und transportsicheren Halterung von Geräten und/oder Zubehör eines mobilen Büros sind seit langem bekannt. Beispielsweise sind aus der Europäischen Patentanmeldung EP 1 182 537 A2 der Anmelderin verschiedenen Ausgestaltungen bekannt, welche eine einfache Anpassbarkeit an unterschiedliche Anwendungen, einen transportsicheren Halt der elektrischen Geräte sowie die Inbetriebnahme oder den Austausch durch Geräte anderer Abmessungen einem ungeübten Benutzer zu ermöglichen. Eine dieser tragbaren Vorrichtung für ein mobiles Büro ist dadurch gekennzeichnet, dass diese
- als Handkoffer mit einer im Abstand zum Kofferboden gelagerten Montageplatte ausgestaltet ist,
- in Führungsschlitzen der Montageplatte verschiebbare Befestigungsmittel vorgesehen sind, welche auf der Montageplatte angeordnete Geräte und/oder Zubehör in Form- und/oder Klemmeingriff halten und
- die Montageplatte schwenkbar gelagert und durch Rastmittel in einer Schließstellung an der Kofferschale festgelegt ist.

Dadurch wird erreicht, dass die fest auf der Montageplatte befestigten Geräte (beispielsweise Notebook und Drucker) durch die Außenschale des Handkoffers voll gegen mechanische Belastungen, die von außen auf den Koffer einwirken, geschützt sind. Weiterhin ist von Vorteil, dass die Befestigungsmittel und die Schnittstellen frei zugänglich sind, so dass Anschluss und Inbetriebnahme durch einen ungeübten Benutzer und eine ergonomisch günstige Bedienung ermöglicht wird. Der Kofferdeckel und der Kofferboden sind lösbar miteinander verbunden (beispielsweise mittels ein-/aushängbarer Laschen-Stiftverbindung). Die Montageplatte ist schwenkbar (beispielweise über ein Scharnier) gelagert und kann durch Rastmittel in einer Schließstellung an der Kofferschale festgelegt werden. Hierzu ist ein Haltewinkel vorgesehen, welcher beispielsweise mindestens einen die Montageplatte durchgreifenden Rasthaken trägt. Zur Verstellung der Befestigungsmittel kann die Montageplatte nach Entrastung am Durchgriff hochgezogen (wobei Rasthaken und Durchgriff zur Einhandbetätigung in Griffweite liegen) und dabei über das Scharnier verschwenkt werden, so dass nun bequem die Einstellung der Befestigungsmittel (Rändelschraube o. dgl.) von der Unterseite der Montageplatte erfolgen kann. Im Einzelnen ist vorgesehen, dass Kofferdeckel und Kofferboden lösbar miteinander verbunden sind und neben der Montageplatte ist eine seitlich benachbart und aus dem Kofferboden seitlich heraus verschwenkbare Tragplatte angeordnet. Dies weist den Vorteil auf, dass mit einem Handgriff der Kofferdeckel abgenommen bzw. eine Verschwenkung durchgeführt werden kann, so dass eine ergonomisch günstige Bedienung und freie Zugänglichkeit der Schnittstellen im eingebauten Zustand der Geräte ermöglicht wird. Das Zubehör kann zwischen hochgezogenen Seitenteilen der Tragplatte aufgenommen und an dieser durch Klettverschlüsse befestigt werden. Für die Führung der Tragplatte beim Verschwenken in vorzugsweise horizontaler Richtung ist eine Ausnehmung vorgesehen. Der Kabelanschluss des Zubehörs, beispielsweise eines Druckers, erfolgt mittels durch die Ausnehmung geführten Kabels. Die Tragplatte, ein Verriegelungshebel und zugehörige Unterlage (wobei zur Tragplatte korrespondierende Ausnehmungen bzw. Führungsschlitz für den Verriegelungshebel vorgesehen sind) des Schwenkmechanismus sind über ein im wesentlichen plattenförmiges Zwischenprofil an der Kofferschale festgelegt. Der Verriegelungshebel kann federbelastet sein, wobei dieser durch die Kulissenführung in der Endstellung hörbar an die Kulissenführung anschlägt. Das Zwischenprofil kann im oberen Bereich neben der Tragplatte Buchsen für den Anschluss des Netzkabels bzw. von Zubehör wie ein Funkmodem oder dergleichen aufweisen. Im Zwischenraum unterhalb der Montageplatte sind Haltemittel beispielsweise für Zubehörteile angeordnet; beispielsweise in Form einer Einlage mit Taschen oder abgesteppten Gummiband für Anschlusskabel, Akku oder dgl. Eine solche Tragplatte sowie Montageplatte ist kostengünstig herstellbar und das Lösen bzw. Schließen der Befestigung ist im Falle eines Austausches oder bei der Inbetriebnahme bzw. Befestigung der Zubehörteile auch für einen ungeübten Benutzer einfach handhabbar.

Weiterhin ist aus der DE 42 20 051 C2 ein Kommunikations-Aktenkoffer mit jeweils einem Kofferunterteil und einem Kofferoberteil bekannt, bei dem das Kofferunterteil eine Außenschale und wenigstens einer Innenschale aufweist. Zur freien Zugänglichkeit eines im Kommunikations-Aktenkoffer angeordneten Kleincomputers ist eine Hebevorrichtung zum Anheben des Kleincomputers aus seiner Betriebspositionsanordnung im Kofferunterteil vorgesehen, wobei ein Sammelsteckblock in die Hebevorrichtung integriert ist. Im Hinblick auf die Anpassungsfähigkeit des Koffers gemäß der DE 42 20 051 C2 an Kleincomputer-Weiterentwicklungen, betätigt die Hebevorrichtung zum Anheben des Kleincomputers ein austauschbares Trageelement für den Kleincomputer. Somit kann bei einem Geräteaustausch auch das Tragelement für den Kleincomputer mit ausgetauscht werden, wodurch Schwierigkeiten bei dessen Arretierung im Kofferunterteil vermieden werden können. Das Tragelement kann unterschiedliche Gestalt haben, um es jeweils, im Hinblick auf eine transportsichere Arretierung, optimal an das darauf anzuordnende Kleincomputers-(Prozessor-)Gehäuse anzupassen. Beispielsweise kann dies in Form einer Platte oder Winkelprofils aber auch nur in Form eines einfachen, gewichtssparenden Drahtrahmens erfolgen. Zur Arretierung des Kleincomputers auf dem Tragelement sind Halteklammern vorgesehen, die Klemmfedereigenschaft besitzen. Dadurch ist keine besondere Montagevoraussetzung am Tragelement und kein eigentliches Werkzeug zur Handhabung erforderlich. Bei einem Drahtrahmen als Tragelement kann die Halteklammer mit einem der entsprechend gebogenen Enden auf den Drahtrahmen aufgerastet und mit dem anderen Ende auf das Prozessor-Gehäuse des Kleincomputers aufgeschoben werden. Weiterhin können Haltevorrichtungen im Kofferunterteil mit daran ortsveränderbar angeordneten Schrauben zur transportsicheren Arretierung der Geräte, Abdeckungen und Zubehör im Handkoffer vorgesehen werden. Die Haltevorrichtungen sind zwei rechtwinklige zueinander angeordnete, unterschiedlich lange Paare von in einem Abstand voneinander angeordneten ersten und zweiten Halteschienen mit einem flachen, U-profilartigen Querschnitt und einem Längsschlitz im U-Profil-Scheitel. Als Haltemittel sind Schrauben mit flachem Kopf vorgesehen, die von unten durch die Längsschlitze in den Halteschienen durchgesteckt sind. Mit nur vier Halteschienen können alle Halteaufgaben im Kofferunterteil gelöst werden, sowohl im vorgesehenen Kleincomputer-Anordnungsbereich als auch im restlichen Kofferunterteilbereich. Die Geräte selbst brauchen nur noch von einer flachen, streifenförmigen Halteklammer aus einem Material mit Federeigenschaften im Kofferunterteil gehalten zu werden. Mittels Schraubhülsen, die durch Ausnehmungen in den Halteklammern hindurchgesteckt und auf die Schrauben in den Längsschlitzen der Halteschienen aufgeschraubt werden, ist ein Lösen und Feststellen von Hand möglich. Werden die im Koffer vorhandenen Geräte gegen andere mit anderen Abmessungen ausgetauscht, können die neu im Kofferunterteil anzuordnenden Geräte alle durch einfaches Verschieben der Schrauben in den Längsschlitzen der Halteschienen zum Anpassen an die neuen Gehäusemaße ebenfalls arretiert werden.

Weiterhin ist aus der DE 296 20 676 U1 ein Koffer zur Aufnahme elektronischer Komponenten - insbesondere Laptop mit Drucker - bekannt, bei dem wenigstens eine vom Boden des Kofferdeckels oder des -bodens im Abstand befestigte Trägerplatte vorgesehen ist. Die Befestigungsmittel sind an der Trägerplatte an beliebigen Stellen befestigbar und treten mit der Komponente in Form- und/oder Klemmeingriff, wobei das Laptop über die Trägerplatte gegen den Boden festgespannt wird. In dem durch die Trägerplatte gebildeten Rahmenbereich werden dabei Bohrungen für Befestigungsbolzen derart angebracht, dass eventuelle Anschluss-, Eingabe- oder Anzeigebereiche nicht beeinträchtigt werden und andererseits eine sichere Verspannung der Komponenten gegen den Deckel bzw. Korpusboden erzielt wird. Bei einer zweiten Ausführungsform ist die Trägerplatte als Montageplatte, z.B. Betonspanplatte, ausgebildet, auf der die Befestigungsmittel derart positioniert werden, dass eine sichere Befestigung des Laptops erzielt wird, ohne dass der Zugriff auf das Laptop, wie z.B. Anschlussanordnungen, Stecker, Betätigungselemente, Anzeigen etc. durch die Befestigungsmittel behindert wird. Weiterhin weist die Montageplatte eine zum Boden des Kofferdeckels bzw. Kofferkorpus gerichtete Abkantung an zwei entgegengesetzten Seiten auf. Hierdurch liegt die Montageplatte mit den Abkantungen auf dem Boden des Kofferdeckels bzw. Korpus auf. Die Montageplatte wird nun über spezielle Befestigungsbolzen gegen eine Auskehlung in den Seitenwänden den Deckels bzw. Korpus verspannt. Diese Befestigungsbolzen sind kopfseitig in der Montageplatte gehalten und weisen einen über das Gewinde verstellbaren quer zur Bolzenachse gerichteten Schwenkhebel auf, der in Befestigungsstellung in die Auskehlung der Seitenwand des Koffers eingreift. Die Befestigungsstellung und die Lösestellung des Schwenkhebels oder der Schwenkarme wird hierbei durch die Abkantung festgelegt, welche im Bereich dieser vorgegebenen Befestigungselemente Durchbrüche haben, die ein Ein- und Ausschwenken des Fortsatzes erlauben. Weiterhin kann die Durchbrechung seitlich begrenzt sein, so dass die Befestigungsstellung des Fortsatzes durch die seitliche Anlage des Schwenkhebels an der Abkantung definiert ist, wobei sie genau quer über die Abkantung nach außen hinaustritt und somit in die Auskehlung der Seitenwand eingreifen kann, während sie in Lösestellung unter der Montageplatte verschwindet. Beim Festziehen dieser Befestigungselemente zur Befestigung der Montageplatte an dem Koffer wird zuerst der Fortsatz in seine Befestigungsstellung gedreht, bis er an der Abkantung anliegt. Anschließend wird der Schwenkhebel, der bolzenseitig durch eine das Gewinde des Schraubbolzens umgreifende Innengewindehülse gehalten ist, bei Drehung des Schraubbolzens nach oben bewegt, bis der Fortsatz nach oben hin gegen die Auskehlung der Seitenwand des Koffers anliegt und dadurch die Montageplatte gegen den Boden des Kofferdeckels bzw. Kofferkorpus festspannt.

Um Arretier- und die Positioniermittel, welche bei geschlossenem Koffer zusammenwirken, auf besonders einfache Weise und auch vom handwerklich Ungeübten rasch an das im Koffer befindliche Gerät anzupassen, ist es aus der DE 197 07 920 C1 bekannt, dass das Arretiermittel bei geöffnetem Koffer in eine das kleinstmögliche Gerät erfassende Position einstellbar ist. Beim Schließen des Koffers und Kontaktieren des Arretiermittels mit der Außenfläche des Gerätes stellt sich dieses selbsttätig und selbsthaltend auf die passende Position ein, bis diese Position mittels einer wiederlösbaren Fixiervorrichtung endgültig arretierbar ist. Das Prinzip beruht somit im Wesentlichen darauf, Arretiermittel in einer Kofferschale derart auszubilden und anzuordnen, dass bei geöffnetem Koffer das Arretiermittel zunächst in eine Maximalauslage bringbar ist. Beginnt man den Koffer zu schließen, so kontaktiert das Arretiermittel eine Außenfläche des Gerätes und verstellt sich dabei, bis der Koffer vollständig geschlossen ist, in die gewünschte und dem momentan verwendeten Gerät exakt entsprechende Position. Nun wird der Koffer wieder geöffnet, wobei das Arretiermittel in der voreingestellten Position verbleibt. Anschließend wird diese Position endgültig fixiert. Jedes Arretiermittel kann von einem schwenkbaren Niederhalter gebildet werden, der in der Kofferoberschale oder an einer Zwischenwand, die an der Kofferoberschale angeordnet ist, angelenkt ist. Vor dem Anpassen wird bei geöffnetem Koffer der Niederhalter in eine Position verschwenkt, in der er beim Schließen des Kofferdeckels die Außenflächen des Gerätes berührt, das in der Kofferunterschale untergebracht ist. Während des Schließens der Deckelschale wird der Niederhalter in seine Endposition verschwenkt. Nun wird der Koffer geöffnet und der Niederhalter mittels einer Spannschraube festgelegt. Somit vollzieht sich die Anpassung des Arretiermittels an das Gerät praktisch selbsttätig und ist deshalb einfach und benutzerfreundlich.

Weiterhin ist aus der DE 44 11 156 A1 ein Handkoffer bekannt, in welchem das PC (Notebook)-Gerät und der daran angeschlossene Drucker für den Transport ortsfest und raumsparend sowie bedienungsfreundlich für die Benutzung angeordnet sind. Im Einzelnen ist vorgesehen, dass der Drucker und das PC-Gerät vom Koffer lösbar auf einer Grundplatte befestigt sind. Die Grundplatte kann mittels am Kofferboden befestigter Arretierungen lösbar am Kofferboden befestigt sein. Der Drucker und das PC-Gerät können mittels Befestigungsbolzen an der jeweiligen Grundplatte befestigt sein. Die Befestigungsbolzen, mit denen die Geräte an den Grundplatten befestigt sind, besitzen Ausnehmungen, welche an die Ecken der Gerätegehäuse angepasst sind, so dass eine einwandfreie Fixierung mit Hilfe der Bolzen an den beiden Grundplatten erreicht wird. Bevorzugt sind vier Bolzen für jedes Gerät an den jeweiligen Ecken vorgesehen. Die Bolzen können Niederhalteplättchen aufweisen, welche am oberen Ende der jeweiligen Bolzen befestigt sind. Durch diese Niederhalteplättchen, welche in entsprechende Abstufungen an den Ecken der Geräte eingreifen, ist eine lagesichere Positionierung der Geräte im Kofferinnern und auf der Grundplatte in jeder Richtung gewährleistet. Zusätzliche Füllmittel wie Schaumstoffe und dergl. zur Fixierung der Geräte sind nicht erforderlich. Dadurch verbleiben Freiräume für zusätzliche Büroutensilien und Arbeitsunterlagen.

Schließlich ist aus dem DE 20 2005 002 839 U1 ein Notebookhalterung bekannt, die aus drei Teilen besteht. Das Unterteil, welches die Form eines stehenden 90- -Grad Winkels hat und von unten mit zwei Bohrungen versehen ist, wird an den Ecken des Notebooks ausgerichtet und mittels zwei Schrauben auf der Grundplatte befestigt. Mit dem Oberteil, welches aus einer winkelförmigen Niederhalterung mit seitlichem Langloch besteht, wird das Notebook zur Arretierung und Befestigung zwischen Bildschirm und Tastatur fixiert. Das Ober- und Unterteil werden durch eine Rändelschraube in der gewünschten Höhe miteinander verbunden, wodurch eine lösbare aber dennoch stabile Verbindung mit der Grundplatte erreicht wird und wodurch diese Kombination auch universell an verschiedene Notebooktypen angepasst werden kann.

Wie die vorstehende Würdigung des Standes der Technik aufzeigt, sind unterschiedlich ausgestaltete Handkoffer für unterschiedliche Anwendungen bekannt. In der Regel wird der Koffer derart ausgestaltet, dass eine sichere und schnelle Befestigung der einzelnen Komponenten/Geräte im Koffer möglich ist. Koffer einfacher Bauart weisen eine fest montierte Montageplatte bzw. eine fest montierte Schaumstoffplatte auf, auf welcher die Halterung für die einzelnen Geräte, beispielsweise Notebook/Drucker gelagert ist. Soll ein Austausch der installierten gegen weiterentwickelte oder auch neuartige Geräte derselben oder artverwandten Geräteklasse entsprechender Größenordnung vorgenommen werden, so ist zusätzlich eine Anpassung an elektronische Komponenten mit unterschiedlichen Abmessungen und damit eine entsprechende Ausgestaltung der Befestigung erforderlich. Wenig Beachtung fand jedoch der Personenkreis der Endkunden, insbesondere bei der Bedienung der Transportsicherungen. Deshalb fehlt in der Praxis, ausgehend von der Europäischen Patentanmeldung EP 1 182 537 A2 der Anmelderin, eine tragbare Vorrichtung für ein mobiles Büro mit einer auch von einem ungeübten Benutzer einfach zu bedienenden Transportsicherung. Besonders bedeutsam ist dies, weil sowohl die Computerindustrie als auch die Zubehörindustrie als äußerst fortschrittliche, entwicklungsfreudige Industrien anzusehen ist, die schnell Verbesserungen und Vereinfachungen aufgreifen und in die Tat umsetzen.

Der Erfindung liegt die Aufgabe zugrunde, eine Transportsicherung für eine tragbare Vorrichtung gemäß der EP 1 182 537 A2 derart weiterzuentwickeln, dass eine kostengünstige Herstellung sowie eine einfache Montage ermöglicht wird. Insbesondere sollen die Befestigung sowie der Austausch eines installierten gegen ein weiterentwickeltes Gerät anderer Abmessungen auch durch einen ungeübten Benutzer vorgenommen werden können.

Diese Aufgabe wird, ausgehend von einer Transportsicherung für eine tragbare Vorrichtung mit den Merkmalen im Oberbegriff des Patentanspruchs 1 dadurch gelöst, dass die Transportsicherung aus einem im wesentlichen u-förmigen Grundkörper, einem zwischen den U-Schenkeln schwenkbar gelagerten Halter und dem an der Basis des U-Schenkels angeordneten Befestigungsmittel besteht, so dass nach manuellem Verschwenken der Transportsicherung auf der Montageplatte angeordnete Geräte und/oder Zubehör in Form- und/oder Klemmeingriff gehalten werden.

Durch die erfindungsgemäße Transportsicherung wird eine vom Benutzer mit einem Handgriff lösbare aber dennoch stabile Verbindung mit der Montageplatte erreicht. Im Vergleich der Befestigung der Geräte und/oder Zubehör an der Montageplatte durch Klettverschlüsse oder Duallocks ist die erfindungsgemäße Transportsicherung einfacher handhabbar, weist keinen Verschleiß auf (Nachlassen der Klebekraft durch Ablösen von Fasern) und kann beliebig oft betätigt werden. Weiterhin ist von Vorteil, dass vom Benutzer - wenn erforderlich - die erfindungsgemäße Transportsicherung an Geräte anderer Abmessungen angepasst werden kann. Durch die schwenkbare Lagerung der Montageplatte ist der Zugang zu dem an der Basis des U-Schenkels angeordneten Befestigungsmittel erheblich erleichtert und ermöglicht so eine genaue Positionierung der Transportsicherung.

In Weiterbildung der Erfindung sind, gemäß Patentanspruch 2, die Befestigungsmittel in Führungsschlitzen der Montageplatte verschiebbar.

Im Vergleich zu der aus der Europäischen Patentanmeldung EP 1 182 537 A2 der Anmelderin bekannten Ausgestaltung mit in Führungsschlitzen der Montageplatte verschiebbaren Befestigungsmittel, welche auf der Montageplatte angeordnete Geräte und/oder Zubehör in Form- und/oder Klemmeingriff halten, ist kein Verschwenken der Montageplatte mit dem darauf befestigten Gerät und Lösen und Verschieben der Befestigungsmittel erforderlich (bei Formeingriff). Würde dagegen beim Gegenstand der Europäischen Patentanmeldung EP 1 182 537 A2 der Anmelderin ein Befestigungsmittel mit Klemmeingriff - beispielsweise ein Anschlagbolzen mit einer Gewindebohrung für eine Schraube - benutzt werden, so kann nur eine Positionierung (gegen Verrutschen) realisiert werden; als eigentliches Befestigungsmittel sind jedoch zusätzlich Klettverschlüsse oder Duallocks erforderlich.

In Weiterbildung der Erfindung ist, gemäß Patentanspruch 3, an einem freien Ende des Halters eine Blattfeder angeordnet, welche mit einem an der gegenüberliegenden Seite zwischen den U-Schenkeln angeordneten Anschlag des Halters verrastbar ist.

Diese Weiterbildung der Erfindung weist den Vorteil auf, dass eine rasche und zuverlässige Bedienung zum Schließen und Lösen der Rastverbindung sichergestellt wird.

Vorzugsweise ist, gemäß Patentanspruch 4, der Anschlag als Hülse ausgestaltet, die Blattfeder weist einen zur Hülse komplementär ausgestalteten Teilbereich auf und das freie Ende der Blattfeder steht als Handhabe zwischen den U-Schenkeln vor.

Durch die Doppelfunktion der Blattfeder, einerseits als Rastmittel andererseits als Handhabe wird eine besonders kostengünstige Ausgestaltung der erfindungsgemäßen Transportsicherung ermöglicht.

Bei einer bevorzugten Ausgestaltung der Erfindung weist, gemäß Patentanspruch 5, der Halter ein im Wesentlichen u-förmiges Gelenk als Schwenklager, eine daran angeformte oder befestigbare Platte mit einem Langloch und ein im Langloch zur Höhenverstellung verschiebbares, komplementär zur Auflagefläche am Gerät ausgestaltetes Teil auf.

Diese Ausgestaltung der Erfindung weist den Vorteil auf, dass einerseits eine einfach zu handhabende Anpassung an geänderte Abmessungen der Geräte/Zubehör erfolgen kann, andererseits dass die Herstellung der Teile keine speziellen und teuren Gussformen erfordert. Die Bleche können CNC-gesteuert mit Hilfe eines Lasers zugeschnitten und mittels einer Biegemaschine zu den einzelnen Teilen geformt werden, so dass nur geringe Herstellungskosten und Werkzeugkosten erforderlich sind. Dadurch wird auch eine schnelle und kosteneffektive Anpassung an unterschiedliche Anwendungen möglich. Desweiteren ist eine umweltgerechte Entsorgungsmöglichkeit gegeben, da sie eine einfache Materialtrennung aller Montageteile erlaubt. Die Verwendung der u-förmigen Ausgestaltung bietet neben dem Vorteil des geringen Materialverbrauchs durch die Ineinanderfügung den Vorteil einer höheren Stabilität. Schließlich können über die erfindungsgemäße Transportsicherung elektrostatische Aufladungen des Gehäuses der Geräte über die Montageplatte abgeleitet werden.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:
- **FIG. 1**: in Draufsicht eine Montageplatte mit durch die erfindungsgemäße Transportsicherung gehaltenem Gerät,
- **FIG. 2**: verschiedene Seitenansichten und eine perspektivische Ansicht der erfindungsgemäßen Transportsicherung in geschlossener Stellung und
- **FIG. 3**: die Transportsicherung nach **FIG.2** in geöffneter Stellung.

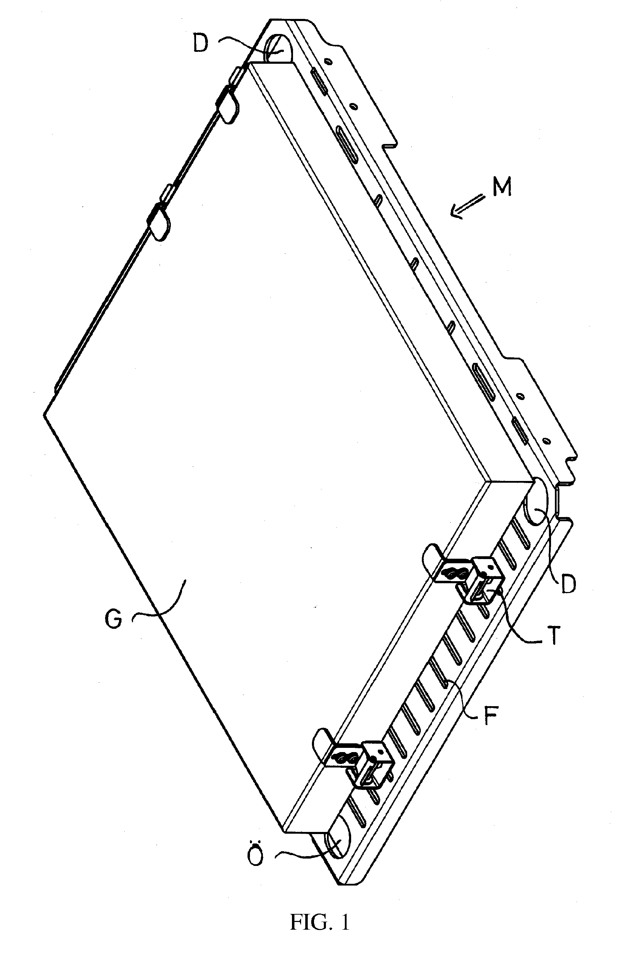

In **FIG. 1** ist eine Montageplatte M mit durch die erfindungsgemäße Transportsicherung T gehaltenem Gerät G, insbesondere ein Notebook, dargestellt. Die Montageplatte M ist Teil einer tragbaren Vorrichtung, welche als Handkoffer mit der im Abstand zum Kofferboden gelagerten Montageplatte M ausgestaltet ist. Der Kofferdeckel (in der Zeichnung nicht dargestellt) und der Kofferboden (in der Zeichnung nicht dargestellt) sind lösbar miteinander verbunden (beispielsweise mittels ein-/aushängbarer Laschen-Stiftverbindung). Die elektrische Verbindung zwischen Gerät G und Zubehör kann über Kabel erfolgen, welche durch eine Öffnung Ö der Montageplatte M herausgeführt sind. Die Montageplatte M ist schwenkbar (beispielsweise über ein Scharnier) gelagert und kann durch Rastmittel in einer Schließstellung an der Kofferschale festgelegt werden. Hierzu ist beispielsweise ein Haltewinkel vorgesehen, welcher mindestens einen die Montageplatte M durchgreifenden Rasthaken trägt.

Die in **FIG. 1** bis **FIG. 3** dargestellte Ausgestaltung der erfindungsgemäßen Transportsicherung T besteht aus einem im wesentlichen u-förmigen Grundkörper GK, einem zwischen den U-Schenkeln schwenkbar gelagerten Halter H und dem an der Basis des U-Schenkels angeordneten Befestigungsmittel, beispielsweise in einer Gewindebohrung GÖ der Basis eingeschraubte Rändelschraube. Zur Verstellung/Verschieben der Befestigungsmittel in Führungsschlitzen F der Montageplatte M - und somit der erfindungsgemäßen Transportsicherung T - kann die Montageplatte M nach Entrastung am Durchgriff D hochgezogen (wobei Rasthaken und Durchgriff D zur Einhandbetätigung in Griffweite liegen) und dabei über das Scharnier verschwenkt werden, so dass nun bequem die Einstellung der Befestigungsmittel (Öffnen und Anziehen der Rändelschraube o. dgl., welche in die Gewindebohrung GÖ des Grundkörpers GK eingreift) von der Unterseite der Montageplatte M erfolgen kann. Alternativ kann auch als Befestigungsmittel ein Knebel vorgesehen sein oder eine End-/Verrastung des Befestigungsmittels in einer Kulisse (sägezahnförmig oder Rastausnehmung) der Führungsschlitze F erfolgen.

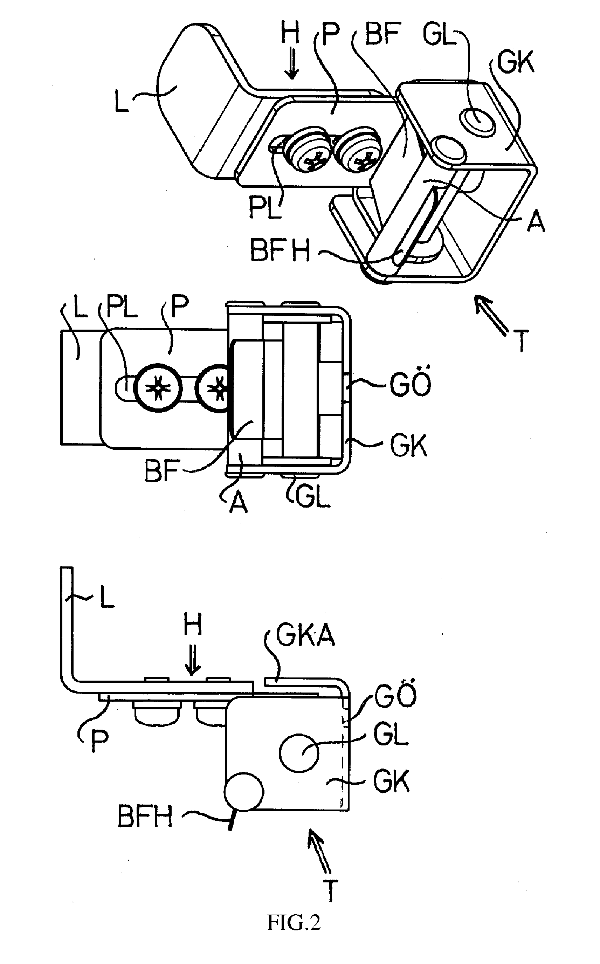

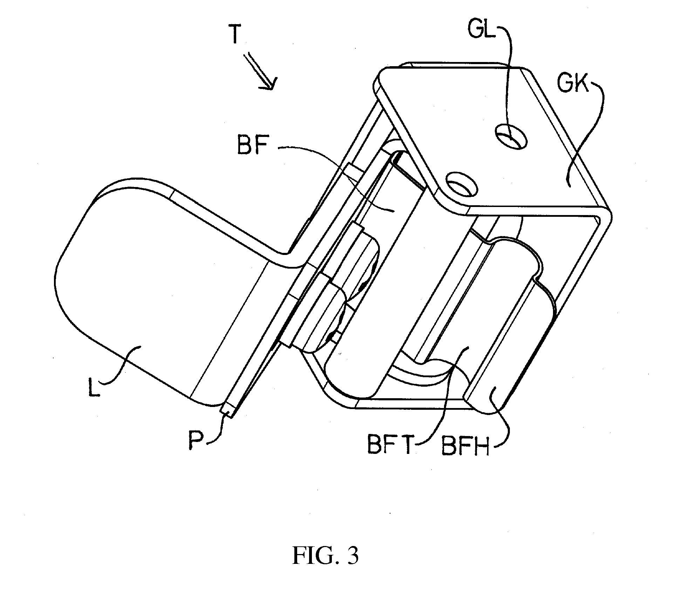

Im Einzelnen ist an einem freien Ende des Halters H eine Blattfeder BF angeordnet, welche mit einem an der gegenüberliegenden Seite zwischen den U-Schenkeln angeordneten Anschlag A des Halters H verrastbar ist. Bei einer bevorzugten Ausgestaltung ist der Anschlag A als Hülse ausgestaltet, wobei die Blattfeder BF einen zur Hülse A komplementär ausgestalteten Teilbereich BFT aufweist und wobei das freie Ende der Blattfeder BF als Handhabe BFH zwischen den U-Schenkeln vorsteht. Insbesondere weist der Halter H ein im Wesentlichen u-förmiges Gelenk GL als Schwenklager, ein daran angeformte oder daran befestigbare Platte P mit einem Langloch PL und ein im Langloch PL zur Höhenverstellung verschiebbares, komplementär zur Auflagefläche am Gerät G ausgestaltetes Teil L auf (zwei- oder dreiteilig, dabei Blattfeder BF und Platte P beispielsweise miteinander vernietet). Vorzugsweise ist das Teil L als L-Winkel ausgestaltet, dessen freies Ende eine Kappe/Überzug aus Kunststoffmaterial für ein angenehmes Griffgefühl tragen kann, und die Höhenverstellung erfolgt mittels Schrauben und eingenieteter Muttern. Weiterhin ist am Grundkörper GK ein Anschlag GKA für das Gerät G angeformt oder angeordnet ist und der Anschlag A ist oberhalb und seitlich versetzt zum Schwenklager GL angeordnet (siehe **FIG. 2** und **FIG. 3**).

Das Lösen der erfindungsgemäßen Transportsicherung T erfolgt durch Daumendruck auf die Handhabe BFH der Blattfeder BF und das Schließen der Transportsicherung T erfolgt durch leichtes Drücken/Schieben auf das Teil L bis die Blattfeder BF hörbar am Anschlag A verrastet. Dabei ist auch von Vorteil, dass der zum Anschlag A komplementär ausgestaltete Teilbereich BFT die Transportsicherung T zwangsläufig in den Anschlag A zieht und dass auch Fertigungstoleranzen durch das federnde Material der Blattfeder BF kompensiert werden.

Schließlich kann eine stoß- und schwingungsgedämpfte Aufhängung vorgesehen werden (in der Zeichnung nicht dargestellt), die die mittels der erfindungsgemäßen Transportsicherung T auf der Montageplatte M befestigten Geräte (beispielsweise Notebook und Drucker) durch die gedämpfte und bewegliche Verbindung zur Außenschale voll gegen mechanische Belastungen, die von außen auf den Koffer einwirken, schützt. Alternativ oder zusätzlich hierzu können federelastische Befestigungsmittel, beispielsweise ein federelastischer Befestigungsbolzen (Halsstück oder Kragen) oder eine federelastische Lagerung des Grundkörpers GK auf der Montageplatte M (beispielsweise oberhalb der Montageplatte M Zugfeder und unterhalb Druckfeder bzw. Kombination hiervon für eine "schwimmende" Lagerung) vorgesehen werden.

Die Arbeitsschritte zur Herstellung und Montage der erfindungsgemäßen Transportsicherung T sind folgende:
- Grundkörper GK, Platte P, Teil L und Gelenk GL stanzen oder schneiden
- Feder BF stanzen und prägen
- M3 Mutter in Platte P einpressen
- Teil L gegebenenfalls Oberflächenbeschichten (mit Warnfarbe versehen)
- M4 Mutter in Grundkörper GK einnieten
- Gelenk GL mit Feder BF vernieten
- Anschlag A (z.B. Distanzhülse) in Gelenk GK montieren
- Gelenk GL mit Platte P vernieten
- Distanzhülse des Gelenk GL in Grundkörper GK montieren und einnieten
- Teil L mit Platte P verschrauben.

Auf überraschend einfache Art und Weise wird durch die erfindungsgemäße Transportsicherung T sowohl ein transportsicherer Halt der elektrischen Geräte G und /oder Zubehör gewährleistet, als auch deren Befestigung, Anschluss und Inbetriebnahme durch einen ungeübten Benutzer ermöglicht. Dabei kann in vorteilhafter Weise der Anwendungsfall berücksichtigt werden. Beispielsweise sind bei einem Notebook auf der Scharnierseite des Notebook-Displays keine Transportsicherung (en) T, sondern beispielsweise Positionierbolzen wie bei der Europäischen Patentanmeldung EP 1 182 537 A2 der Anmelderin angeordnet, da das Öffnen des Notebook-Displays gegen eine versehentlich geschlossene gebliebene Transportsicherung T zu einer Beschädigung der Transportsicherung T bzw. der Notebook führen kann. Schließlich sind die kostengünstige Herstellung und einfache Montage von Vorteil.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im Patentanspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Patentanspruchs 1 weggelassen bzw. durch mindestens ein an anderer Stelle der Anmeldung offenbartes Einzelmerkmal ersetzt werden kann.

## Patentansprüche

1. Transportsicherung für eine tragbare Vorrichtung für ein mobiles Büro, welche als Handkoffer mit einer im Abstand zum Kofferboden gelagerten Montageplatte (M) ausgestaltet ist und bei welcher die Montageplatte (M) schwenkbar gelagert ist, **dadurch gekennzeichnet, dass** die Transportsicherung (T) aus einem im wesentlichen u-förmigen Grundkörper (GK), einem zwischen den U-Schenkeln schwenkbar gelagerten Halter (H) und einem an der Basis des U-Schenkels angeordneten Befestigungsmittel besteht, so dass nach manuellem Verschwenken der Transportsicherung (T) auf der Montageplatte (M) angeordnete Geräte (G) und/oder Zubehör in Form- und/oder Klemmeingriff gehalten werden.

2. Transportsicherung nach Anspruch 1, **dadurch gekennzeichnet, dass** die Befestigungsmittel in Führungsschlitzen (F) der Montageplatte (M) verschiebbar sind.

3. Transportsicherung nach Anspruch 1, **dadurch gekennzeichnet, dass** an einem freien Ende des Halters (H) eine Blattfeder (BF) angeordnet ist, welche mit einem an der gegenüberliegenden Seite zwischen den U-Schenkeln angeordneten Anschlag (A) des Halters (H) verrastbar ist.

4. Transportsicherung nach Anspruch 2, **dadurch gekennzeichnet, dass** der Anschlag (A) als Hülse ausgestaltet, dass die Blattfeder (BF) einen zur Hülse (A) komplementär ausgestalteten Teilbereich (BFT) aufweist und dass das freie Ende der Blattfeder (BF) als Handhabe (BFH) zwischen den U-Schenkeln vorsteht.

5. Transportsicherung nach Anspruch 1, **dadurch gekennzeichnet, dass** der Halter (H) ein im Wesentlichen u-förmiges Gelenk (GL) als Schwenklager mit einer daran angeformten oder befestigbaren Platte (P) mit einem Langloch (PL) und ein im Langloch (PL) zur Höhenverstellung verschiebbares, komplementär zur Auflagefläche am Gerät (G) ausgestaltetes Teil (L) aufweist.

6. Transportsicherung nach Anspruch 1, **dadurch gekennzeichnet, dass** das Teil (L) als L-Winkel ausgestaltet ist.

7. Transportsicherung nach Anspruch 1, **dadurch gekennzeichnet, dass** am Grundkörper (GK) ein Anschlag (GKA) für das Gerät (G) angeformt oder angeordnet ist.

8. Transportsicherung nach Anspruch 2 und 4, **dadurch gekennzeichnet, dass** der Anschlag (A) in oberhalb und seitlich versetzt zum Schwenklager (GL) angeordnet ist.

9. Transportsicherung nach Anspruch 1, **gekennzeichnet durch** federelastische Befestigungsmittel oder **durch** eine federelastische Lagerung des Grundkörper (GK) auf der Montageplatte (M).
